(19) 

Europäisches
Patentamt
European
Patent Office
Office européen
des brevets

(11) **EP 4 459 907 A1**

(12) **EUROPEAN PATENT APPLICATION**
published in accordance with Art. 153(4) EPC

(43) Date of publication:
**06.11.2024 Bulletin 2024/45**

(21) Application number: **22914677.4**

(22) Date of filing: **26.12.2022**

(51) International Patent Classification (IPC):
**H04L 1/00** $^{(2006.01)}$

(52) Cooperative Patent Classification (CPC):
**H04L 1/00; H04L 1/06**

(86) International application number:
**PCT/CN2022/141968**

(87) International publication number:
**WO 2023/125423 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2021 CN 202111658299**

(71) Applicant: **Vivo Mobile Communication Co., Ltd.
Dongguan, Guangdong 523863 (CN)**

(72) Inventors:
• **HUANG, Wei
  Dongguan, Guangdong 523863 (CN)**
• **JIANG, Dajie
  Dongguan, Guangdong 523863 (CN)**

(74) Representative: **Lavoix
Bayerstraße 83
80335 München (DE)**

(54) **CODING METHOD, DEVICE, AND READABLE STORAGE MEDIUM**

(57)     This application pertains to the field of communications technologies, and discloses an encoding method and apparatus, and a readable storage medium. The method includes: performing, by an encoder, encoding in a DSTBC encoding mode by using an NSTBC codebook, to obtain a transmitted symbol in a current symbol period; and determining, by the encoder, a transmitted symbol in a symbol period next to the current symbol period based on the transmitted symbol obtained through encoding in the current symbol period and the NSTBC codebook.

```
                                              ┌─ 201
  ┌─────────────────────────────────────┐
  │ An encoder performs encoding in a DSTBC │
  │ encoding mode by using an NSTBC         │
  │ codebook, to obtain a transmitted symbol in a │
  │ current symbol period                   │
  └─────────────────────────────────────┘
                     │
                     ▼                        ┌─ 202
  ┌─────────────────────────────────────┐
  │ The encoder determines a transmitted symbol │
  │ in a symbol period next to the current symbol │
  │ period based on the transmitted symbol      │
  │ obtained through encoding in the current    │
  │ symbol period and the NSTBC codebook        │
  └─────────────────────────────────────┘
```

**FIG. 2**

EP 4 459 907 A1

**Description**

**CROSS-REFERENCE TO RELATED APPLICATIONS**

This application claims priority to Chinese Patent Application No. 202111658299.6, filed in China on December 30, 2021, which is incorporated herein by reference in its entirety.

**TECHNICAL FIELD**

This application pertains to the field of communications technologies, and specifically relates to an encoding method and apparatus, and a readable storage medium.

**BACKGROUND**

Although conventional orthogonal space-time block code (Orthogonal Space-Time Block Code, OSTBC) coding codebooks including space-time block codes (Alamouti codes) can achieve a full diversity gain and a full rate gain, the codebooks are all designed for conventional active radio frequency communication, without considering modulation characteristics and implementation complexity of passive terminals like backscatter communication. In addition, a decoder needs to know channel state information (Channel State Information, CSI) between all transmit antennas and receive antennas.

Currently, there is an urgent need for a differential space-time block code encoding method that can reduce system implementation complexity without requiring a decoder to know CSI between all transmit antennas and receive antennas.

**SUMMARY**

Embodiments of this application provide an encoding method and apparatus, and a readable storage medium to resolve a problem that system implementation complexity cannot be reduced while a decoder does not know CSI between all transmit antennas and receive antennas.

According to a first aspect, an encoding method is provided and includes:

performing, by an encoder, encoding in a differential space-time block code (Differential Space-Time Block Code, DSTBC) encoding mode by using a new space-time block code (New Space-Time Block Code, NSTBC) codebook, to obtain a transmitted symbol in a current symbol period; and

determining, by the encoder, a transmitted symbol in a symbol period next to the current symbol period based on the transmitted symbol obtained through encoding in the current symbol period and the NSTBC codebook.

According to a second aspect, an encoding apparatus is provided and includes:

a differential encoding module, configured to perform, by an encoder, encoding in a DSTBC encoding mode by using an NSTBC codebook, to obtain a transmitted symbol in a current symbol period; and

an NSTBC encoding module, configured to determine, by the encoder, a transmitted symbol in a symbol period next to the current symbol period based on the transmitted symbol obtained through encoding in the current symbol period and the NSTBC codebook.

According to a third aspect, an encoder is provided. The encoder includes a processor and a memory. The memory stores a program or instructions capable of running on the processor. When the program or instructions are executed by the processor, the steps of the method according to the first aspect are implemented.

According to a fourth aspect, an encoder is provided and includes a processor and a communication interface. The processor is configured to: perform, by the encoder, encoding in a differential space-time block code DSTBC encoding mode by using a new space-time block code NSTBC codebook, to obtain a transmitted symbol in a current symbol period; and

determine, by the encoder, a transmitted symbol in a symbol period next to the current symbol period based on the transmitted symbol obtained through encoding in the current symbol period and the NSTBC codebook.

According to a fifth aspect, a readable storage medium is provided. The readable storage medium stores a program or instructions. When the program or instructions are executed by a processor, the steps of the method according to the first aspect are implemented.

According to a sixth aspect, a chip is provided. The chip includes a processor and a communication interface.

The communication interface is coupled to the processor. The processor is configured to run a program or instructions to implement the method according to the first aspect.

According to a seventh aspect, a computer program product is provided. The computer program product is stored in a storage medium. The computer program product is executed by at least one processor to implement the steps of the method according to the first aspect.

In the embodiments of this application, on one hand, the transmitted symbol in the current symbol period is calculated in the DSTBC encoding mode by using the NSTBC codebook, and on the other hand, the transmitted symbol in the next symbol period is calculated by using the low-complexity NSTBC codebook. Based on a DSTBC design, neither the encoder nor a decoder needs to know CSI, that is, there is no need to transmit a pilot signal on each transmit antenna. Therefore, system overheads are reduced. In addition, based on the NSTBC codebook, a quantity or types of load impedances on each antenna can be reduced, system implementation complexity can be reduced, and a probability of error detection can be effectively reduced, while a diversity gain is ensured.

## BRIEF DESCRIPTION OF DRAWINGS

FIG. 1a is a schematic structural diagram of a backscatter communication transmit end;
FIG. 1b is a schematic diagram of Alamouti space-time block code diversity transmission;
FIG. 2 is a schematic flowchart of an encoding method according to an embodiment of this application;
FIG. 3 is a schematic structural diagram of an encoding apparatus according to an embodiment of this application;
FIG. 4 is a schematic structural diagram of a communication device according to an embodiment of this application;
FIG. 5 is a schematic structural diagram of a terminal according to an embodiment of this application; and
FIG. 6 is a schematic structural diagram of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

In the embodiments of this application, an encoder may be deployed on a transmitting device, for example, may be a terminal (User Equipment, UE) or a network-side device. The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal is not limited in the embodiments of this application. The network-side device may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

For better understanding the technical solutions of this application, the following content is first described.

A future 6G communications network needs to support the massive Internet of Everything, where a quantity of IoT devices will reach hundreds of billions, and a connection density thereof will be 10-100 times higher than that of 5G, reaching a connection density of 10-100/$m^2$. The massive IoT devices pose new challenges in terms of cost and power consumption. Cellular networking, low cost, low power consumption, and even passive zero power consumption are main trends in development of IoT devices in the future. Conventional passive terminals are limited by power consumption and hardware capabilities of the terminals, and communication transmission distances of most of the terminals are less than 10 meters, far from a goal of cellular coverage of 100 meters. Therefore, how to effectively increase communication distances of passive terminals has become a difficulty that needs to be resolved after cellular networking of this technology.

Backscatter communication (Backscatter Communication, BSC) controls an amplitude or a phase of a signal by changing a load impedance. Considering other non-ideal factors in a modulation circuit for backscatter communication, there are more or less errors in an amplitude or a phase of an output signal. However, as long as these signal errors are within a resolvable range, there is no impact on signal demodulation. Therefore, if there are fewer load impedances or fewer types of load impedances to be controlled on each antenna, a tolerable error may be greater, and a probability of error detection is smaller. In addition, due to power consumption and capability limitations of a backscatter communication device (BSC UE), in some cases, waste of power consumption and resources caused by sending pilots is not desired, that is, a decoder is required to complete signal demodulation without knowing CSI information.

Backscatter communication (Backscatter Communication, BSC):

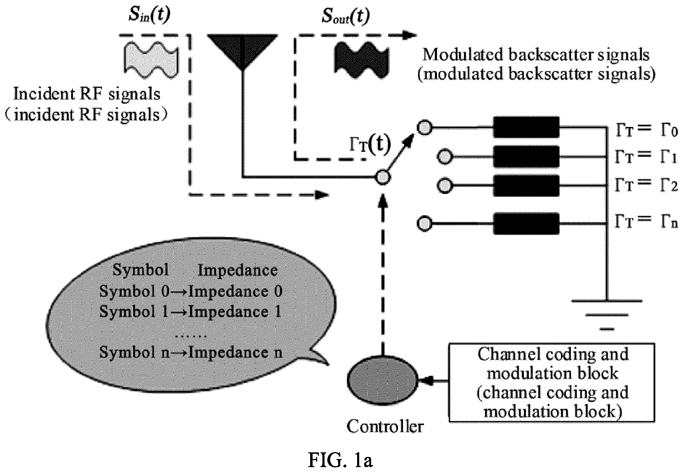

Backscatter communication means that a backscatter communication device uses a radio frequency signal from another device or in an environment to perform signal modulation to transmit information of the backscatter communication device. A modulation circuit for backscatter communication is shown in FIG. 1a. The backscatter communication device controls a reflection coefficient $\Gamma$ of the circuit by adjusting an internal impedance of the backscatter communication device, thereby changing an amplitude, a frequency, a phase, or the like of an incident signal to implement signal modulation. The reflection coefficient of the signal may be represented as:

$$\Gamma = \frac{Z_1 - Z_0}{Z_1 + Z_0} = |\Gamma|e^{j\theta_T},$$

where $Z_0$ is an antenna characteristic impedance, $Z_1$ is a load impedance, $j$ represents a complex number, and $\theta_T$ represents a phase. Assuming that the incident signal is $S_{in}(t)$, an output signal is $S_{out}(t) = S_{in}(t)|\Gamma|e^{j\theta_T}$. Therefore, corresponding amplitude modulation, frequency modulation, or phase modulation can be implemented by properly controlling the reflection coefficient. Based on this, the backscatter communication device may be a tag in a conventional radio frequency identification (Radio Frequency Identification, RFID), or a passive or semi-passive device, which is collectively referred to as BSC UE herein for convenience.

Orthogonal space-time block code (Orthogonal Space-Time Block Code, OSTBC):

Space-time block codes STBCs are widely applied in cellular communication and wireless local area networks. By introducing signal redundancy in space domain and time domain and properly constructing a block encoding transmission matrix, the STBC achieves a diversity gain and an antenna gain without increasing a bandwidth.
An OSTBC is a special linear STBC, and its linear space-time block code **S** meets the following single condition:

$$\mathbf{S}^H \mathbf{S} = \sum_{i=1}^{M} |s_i|^2 \mathbf{I},$$

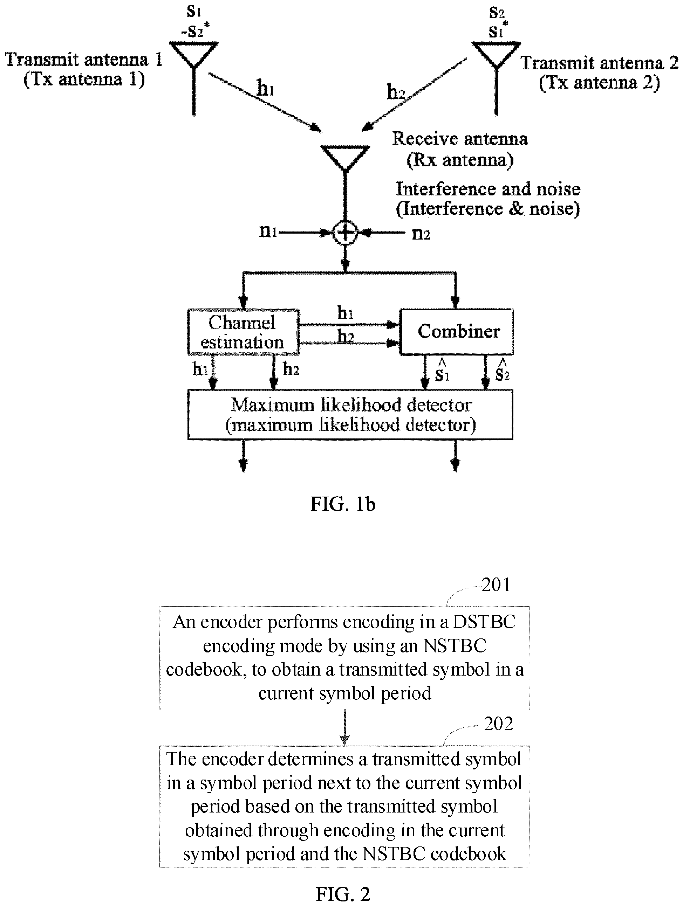

where **I** represents an identity matrix with M dimensions, $i$ represents an $i^{th}$ element in the M dimensions, $s_i$ is a diagonal element, an element in an $i^{th}$ row in S represents a symbol transmitted on an $i^{th}$ transmit antenna within M moments, and an element in a $j^{th}$ column in S represents a symbol transmitted at a $j^{th}$ moment on an $n_t^{th}$ antenna. In the transmission matrix S, columns that meet the foregoing formula are mutually orthogonal, which means that signal sequences transmitted on different antennas are also orthogonal, thereby ensuring that the STBC can achieve a full diversity gain at the same time. A corresponding decoder only needs to perform simple maximum ratio combining (Maximal ratio combining, MRC) to sequentially decouple transmitted symbols on different antennas, and perform detection and estimation by using a maximum likelihood detection (Maximum likelihood, ML) algorithm.
An Alamouti code is a most representative OSTBC code and can achieve a full diversity gain and a full rate gain. FIG. 1b is a principle block diagram of the Alamouti code. In a given symbol period, two symbols are transmitted simultaneously on two antennas. It is assumed that in a current symbol period, a symbol transmitted on antenna 1 is denoted as $s_1$, and that a symbol transmitted on antenna 2 is denoted as $s_2$. In a next symbol period, a symbol transmitted on antenna 1 is $(-s_2^*)$, and a symbol transmitted on antenna 2 is $s_1^*$. In this way, the following space-time block code matrix is formed:

$$S = \begin{bmatrix} s_1 & s_2 \\ -s_2^* & s_1^* \end{bmatrix}.$$

Assuming that channels from the two transmit antennas to receive antennas are represented as $h_1$ and $h_2$ respectively and meet time-invariant characteristics in two adjacent symbol periods, that is:

$$h_1(t) = h_1(t + T) = h_1 = \alpha_1 e^{j\theta_1},$$

and

$$h_2(t) = h_2(t + T) = h_2 = \alpha_2 e^{j\theta_1},$$

received signals on the receive antennas in the two symbol periods are:

$$r_1 = r(t) = h_1 s_1 + h_2 s_2 + n_1,$$

and

$$r_2 = r(t + T) = -h_1 s_2^* + h_2 s_1^* + n_2,$$

where $n_1$ and $n_2$ represent received noise and signal interference. The decoder performs combined reception according to the following rules:

$$\hat{s}_1 = h_1^* r_1 + h_2 r_2^*,$$

and

$$\hat{s}_2 = h_2^* r_1 - h_1 r_2^*.$$

The following may be obtained by substituting the received signals $r_1$ and r2:

$$\hat{s}_1 = (\alpha_1^2 + \alpha_2^2)s_1 + h_1^* n_1 + h_2 n_2^*,$$

and

$$\hat{s}_2 = (\alpha_1^2 + \alpha_2^2)s_2 - h_1 n_2^* + h_2^* n_1.$$

Finally, signals $s_1$ and $s_2$ can be estimated by using an ML detector.

In addition to the typical Alamouti block code, a codebook of typical two-antenna OSTBCs is shown in Table 1.

**Table 1**

| S | -S | S* | -S* |
|---|---|---|---|
| $\begin{bmatrix} -s_1 & s_2 \\ s_2^* & s_1^* \end{bmatrix}$ | $\begin{bmatrix} s_1 & -s_2 \\ -s_2^* & -s_1^* \end{bmatrix}$ | $\begin{bmatrix} -s_1^* & s_2^* \\ s_2 & s_1 \end{bmatrix}$ | $\begin{bmatrix} s_1^* & -s_2^* \\ -s_2 & -s_1 \end{bmatrix}$ |
| $\begin{bmatrix} s_1 & -s_2 \\ s_2^* & s_1^* \end{bmatrix}$ | $\begin{bmatrix} -s_1 & s_2 \\ -s_2^* & -s_1^* \end{bmatrix}$ | $\begin{bmatrix} s_1^* & -s_2^* \\ s_2 & s_1 \end{bmatrix}$ | $\begin{bmatrix} -s_1^* & s_2^* \\ -s_2 & -s_1 \end{bmatrix}$ |
| $\begin{bmatrix} s_1 & s_2 \\ s_2^* & -s_1^* \end{bmatrix}$ | $\begin{bmatrix} -s_1 & -s_2 \\ -s_2^* & s_1^* \end{bmatrix}$ | $\begin{bmatrix} s_1^* & s_2^* \\ s_2 & -s_1 \end{bmatrix}$ | $\begin{bmatrix} -s_1^* & -s_2^* \\ -s_2 & s_1 \end{bmatrix}$ |
| $\begin{bmatrix} s_1 & s_2 \\ -s_2^* & s_1^* \end{bmatrix}$ | $\begin{bmatrix} -s_1 & -s_2 \\ s_2^* & -s_1^* \end{bmatrix}$ | $\begin{bmatrix} s_1^* & s_2^* \\ -s_2 & s_1 \end{bmatrix}$ | $\begin{bmatrix} -s_1^* & -s_2^* \\ s_2 & -s_1 \end{bmatrix}$ |

New space-time block code (New Space-Time Block Code, NSTBC):

In recent years, with deep research on backscatter communication, some researchers put forward a concept of backscatter (Backscatter) diversity and design a corresponding space-time block codeword. Based on this type of codeword, hardware implementation complexity is reduced, and a probability of error detection is reduced by optimizing a codebook of conventional Alamouti codes.

Two-antenna transmit diversity is used as an example, that is, a codeword matrix S in this case has $2 \times 2$ dimensions, and its coding structure is:

$$S_2 = \begin{bmatrix} s_1 & s_2^* \\ s_2 & -s_1^* \end{bmatrix}.$$

According to the foregoing coding structure, it is assumed that in a current symbol period, a symbol transmitted on antenna 1 is denoted as $s_1$, and that a symbol transmitted on antenna 2 is denoted as $s_2^*$. In a next symbol period, a symbol transmitted on antenna 1 is denoted as $s_2$, and a symbol transmitted on antenna 2 is denoted as $(-s_1^*)$.

According to a definition of an OSTBC codeword, $S_2$ belongs to the OSTBC codeword, and therefore can achieve a full diversity gain and full rate transmission. The following analyzes differences between this type of codeword and the conventional Alamouti code in backscatter communication.

Assuming that transmission is performed based on a BPSK modulation symbol, according to a backscatter communication mapping principle, mapping rules for symbols 0 and 1 and reflection coefficients are:

$$\begin{cases} 0 \Leftrightarrow \Gamma_1 = |\Gamma|e^{j\theta} \\ 1 \Leftrightarrow \Gamma_2 = |\Gamma|e^{j(\theta+\pi)} \end{cases}$$

In other words, the symbols 0 and 1 are represented by controlling two phase-inverted load impedances. Therefore, a coding table for transmitting different symbols simultaneously on two antennas by using a diversity encoding codeword $S_2$ is Table 4. For comparison, Table 2 and Table 3 also provide coding tables for transmitting different symbols simultaneously on two antennas by using an Alamouti codeword and an extended Alamouti codeword. The extended Alamouti codeword is:

$$\begin{bmatrix} s_1 & s_2 \\ s_2^* & -s_1^* \end{bmatrix}.$$

**Table 2**

| 00 | Antenna 1 | Antenna 2 | 01 | Antenna 1 | Antenna 2 |
|---|---|---|---|---|---|
| $t$ | $|\Gamma|e^{j\theta}$ | $|\Gamma|e^{-j\theta}$ | $t$ | $|\Gamma|e^{j\theta}$ | $|\Gamma|e^{-j(\theta+\pi)}$ |
| $t+T$ | $|\Gamma|e^{j\theta}$ | $|\Gamma|e^{-j(\theta+\pi)}$ | $t+T$ | $|\Gamma|e^{j(\theta+\pi)}$ | $|\Gamma|e^{-j(\theta+\pi)}$ |
| 10 | Antenna 1 | Antenna 2 | 11 | Antenna 1 | Antenna 2 |
| $t$ | $|\Gamma|e^{j(\theta+\pi)}$ | $|\Gamma|e^{-j\theta}$ | $t$ | $|\Gamma|e^{j(\theta+\pi)}$ | $|\Gamma|e^{-j(\theta+\pi)}$ |
| $t+T$ | $|\Gamma|e^{j\theta}$ | $|\Gamma|e^{-j\theta}$ | $t+T$ | $|\Gamma|e^{j(\theta+\pi)}$ | $|\Gamma|e^{-j\theta}$ |

**Table 3**

| 00 | Antenna 1 | Antenna 2 | 01 | Antenna 1 | Antenna 2 |
|---|---|---|---|---|---|
| $t$ | $|\Gamma|e^{j\theta}$ | $|\Gamma|e^{j\theta}$ | $t$ | $|\Gamma|e^{j\theta}$ | $|\Gamma|e^{j(\theta+\pi)}$ |
| $t+T$ | $|\Gamma|e^{-j(\theta+\pi)}$ | $|\Gamma|e^{-j\theta}$ | $t+T$ | $|\Gamma|e^{-j\theta}$ | $|\Gamma|e^{-j\theta}$ |
| 10 | Antenna 1 | Antenna 2 | 11 | Antenna 1 | Antenna 2 |
| $t$ | $|\Gamma|e^{j(\theta+\pi)}$ | $|\Gamma|e^{j\theta}$ | $t$ | $|\Gamma|e^{j(\theta+\pi)}$ | $|\Gamma|e^{j(\theta+\pi)}$ |
| $t+T$ | $|\Gamma|e^{-j(\theta+\pi)}$ | $|\Gamma|e^{-j(\theta+\pi)}$ | $t+T$ | $|\Gamma|e^{-j\theta}$ | $|\Gamma|e^{-j(\theta+\pi)}$ |

**Table 4**

| 00 | Antenna 1 | Antenna 2 | 01 | Antenna 1 | Antenna 2 |
|---|---|---|---|---|---|
| $t$ | $|\Gamma|e^{j\theta}$ | $|\Gamma|e^{j\theta}$ | $t$ | $|\Gamma|e^{j\theta}$ | $|\Gamma|e^{j(\theta+\pi)}$ |
| $t+T$ | $|\Gamma|e^{-j\theta}$ | $|\Gamma|e^{-j(\theta+\pi)}$ | $t+T$ | $|\Gamma|e^{-j(\theta+\pi)}$ | $|\Gamma|e^{-j(\theta+\pi)}$ |
| 10 | Antenna 1 | Antenna 2 | 11 | Antenna 1 | Antenna 2 |
| $t$ | $|\Gamma|e^{j(\theta+\pi)}$ | $|\Gamma|e^{j\theta}$ | $t$ | $|\Gamma|e^{j(\theta+\pi)}$ | $|\Gamma|e^{j(\theta+\pi)}$ |
| $t+T$ | $|\Gamma|e^{-j\theta}$ | $|\Gamma|e^{-j\theta}$ | $t+T$ | $|\Gamma|e^{-j(\theta+\pi)}$ | $|\Gamma|e^{-j\theta}$ |

As can be learned according to Table 2, based on the designed NSTBC codebook, antenna 1 requires only two coefficients $|\Gamma|e^{j\theta}$ and $|\Gamma|e^{j(\theta+\pi)}$; and antenna 2 also requires only two coefficients $|\Gamma|e^{-j\theta}$ and $|\Gamma|e^{-j(\theta+\pi)}$, that is, only two types of load impedances are required on each antenna. As can be learned according to Tables 3 and 4, based on the Alamouti codeword and the extended Alamouti codeword, both antenna 1 and antenna 2 require four coefficients

$|\Gamma|e^{j\theta}$, $|\Gamma|e^{j(\theta+\pi)}$, $|\Gamma|e^{-j\theta}$, and $|\Gamma|e^{-j(\theta+\pi)}$, that is, four types of load impedances are required on each antenna.

Differential space-time block code (Differential Space-Time Block Code, DSTBC):

For the conventional OSTBC and NSTBC, the decoder uses a coherent detection decoding scheme. Therefore, the decoder requires accurate channel state information (Chanel State Information, CSI) from a transmit antenna to a receive antenna. However, in high-speed movement scenarios or scenarios with fast-changing channel fading conditions, or scenarios in which it is difficult to transmit pilots due to power and cost limitations in backscatter communication, it is difficult for the decoder to perform channel estimation accurately or costs of accurate channel estimation are high. In this case, the decoder cannot obtain accurate CSI information. The differential space-time block code is a scheme in which neither the encoder nor the decoder needs to know CSI information, encoding and decoding are simple, and diversity gains can be obtained. The following uses two-antenna transmission and single-antenna reception as examples for description.

At a transmitting encoder, it is assumed that the encoder transmits the following symbols in symbol period 1 and symbol period 2 according to the Alamouti scheme:

$$S = \begin{bmatrix} s_1 & s_2 \\ -s_2^* & s_1^* \end{bmatrix}.$$

Signals $s_1$ and $s_2$ transmitted at the two times do not carry information and are used only as reference signals. Next, the encoder performs transmission in a differential encoding mode. Assuming that in a $(2t - 1)^{th}$ symbol period, symbols transmitted on a first antenna and a second antenna are $s_{2t-1}$ and $s_{2t}$ respectively, in a $2t^{th}$ symbol period, symbols transmitted on the first antenna and the second antenna are $-s_{2t}^*$ and $s_{2t-1}^*$ respectively. In a $(2t+1)^{th}$ symbol period, a group of 2m bits arrives at the encoder, and a corresponding coefficient vector $(A(\mathcal{D}_{2t+1}), B(\mathcal{D}_{2t+1}))$ is generated. The encoder calculates, based on symbol vectors transmitted in the previous two symbol periods and the current coefficient vector $(A(\mathcal{D}_{2t+1}), B(\mathcal{D}_{2t+1}))$, symbols transmitted in the current $(2t + 1)^{th}$ symbol period:

$$(s_{2t+1}, s_{2t+2}) = A(\mathcal{D}_{2t+1})(s_{2t-1}, s_{2t}) + B(\mathcal{D}_{2t+1})(-s_{2t}^*, s_{2t-1}^*).$$

In addition, based on the Alamouti codebook, transmitted symbols $-s_{2t+2}^*$ and $s_{2t+1}^*$ on the two antennas in a $(2t + 2)^{th}$ symbol period are calculated respectively, where the coefficient vector $(A(\mathcal{D}_{2t+1}), B(\mathcal{D}_{2t+1}))$ meets:

$$A(\mathcal{D}_{2t+1}) = s_{2t+1}s_{2t-1}^* + s_{2t+2}s_{2t}^*,$$

and

$$B(\mathcal{D}_{2t+1}) = -s_{2t+1}s_{2t} + s_{2t+2}s_{2t-1}.$$

According to the foregoing encoding rules, the transmitted symbols are repeatedly encoded.
At a receiving decoder, assuming that signals $r_{2t-1}$, $r_{2t}$, $r_{2t+1}$, and $r_{2t+2}$ are received, and that a channel matrix is defined as:

$$\Lambda(\alpha_1, \alpha_2) = \begin{pmatrix} \alpha_1 & \alpha_2^* \\ \alpha_2 & -\alpha_1^* \end{pmatrix},$$

and that a noise signal is defined as:

$$N_{2t-1} = \left(\eta_{2t-1}, \eta_{2t}^*\right),$$

the received signals may be expressed as:

$$(r_{2t-1}, r_{2t}^*) = (s_{2t-1}, s_{2t})\Lambda(\alpha_1, \alpha_2) + N_{2t-1},$$

and

$$(r_{2t+1}, r_{2t+2}^*) = (s_{2t+1}, s_{2t+2})\Lambda(\alpha_1, \alpha_2) + N_{2t+1}.$$

Therefore,

$$(r_{2t+1}, r_{2t+2}^*) \cdot (r_{2t-1}, r_{2t}^*) =$$
$$(s_{2t+1}, s_{2t+2})\Lambda(\alpha_1, \alpha_2)\Lambda^*(\alpha_1, \alpha_2)(s_{2t-1}^*, s_{2t}^*) + (s_{2t+1}, s_{2t+2})\Lambda(\alpha_1, \alpha_2)N_{2t-1}^* +$$
$$N_{2t+1}\Lambda^*(\alpha_1, \alpha_2)(s_{2t-1}^*, s_{2t}^*) + N_{2t+1}N_{2t-1}^*.$$

After combining processing, the following may be obtained:

$$r_{2t+1}r_{2t-1}^* + r_{2t+2}^*r_{2t} = (|\alpha_1|^2 + |\alpha_2|^2)(s_{2t+1}s_{2t-1}^* + s_{2t+2}s_{2t}^*) +$$
$$(s_{2t+1}, s_{2t+2})\Lambda(\alpha_1, \alpha_2)N_{2t-1}^* + N_{2t+1}\Lambda^*(\alpha_1, \alpha_2)(s_{2t-1}^*, s_{2t}^*) + N_{2t+1}N_{2t-1}^*.$$

For simplicity, the following formulas are defined:

$$\mathcal{R}_1 = r_{2t+1}r_{2t-1}^* + r_{2t+2}^*r_{2t},$$

and

$$\mathcal{N}_1 = (s_{2t+1}, s_{2t+2})\Lambda(\alpha_1, \alpha_2)N_{2t-1}^* + N_{2t+1}\Lambda^*(\alpha_1, \alpha_2)(s_{2t-1}^*, s_{2t}^*) +$$
$$N_{2t+1}N_{2t-1}^*.$$

Therefore, the following may be obtained:

$$\mathcal{R}_1 = (|\alpha_1|^2 + |\alpha_2|^2)A(\mathcal{D}_{2t-1}) + \mathcal{N}_1.$$

According to the previous mathematical derivation,

$$(s_{2t+1}, s_{2t+2}) = A(\mathcal{D}_{2t+1})(s_{2t-1}, s_{2t}) + B(\mathcal{D}_{2t+1})(-s_{2t}^*, s_{2t-1}^*).$$

Therefore,

$$(r_{2t}, -r_{2t-1}^*) = (-s_{2t}^*, s_{2t-1}^*)\Lambda(\alpha_1, \alpha_2) + N_{2t}$$

where

$$N_{2t} = (\eta_{2t}, -\eta_{2t-1}^*).$$

Signals at four moments are processed as follows:

$$\left(r_{2t+1}, r_{2t+2}^*\right) \cdot \left(r_{2t}, -r_{2t-1}^*\right) =$$

$$\left(s_{2t+1}, s_{2t+2}\right)\Lambda(\alpha_1, \alpha_2)\Lambda^*(\alpha_1, \alpha_2)\left(-s_{2t}, s_{2t-1}\right) + \left(s_{2t+1}, s_{2t+2}\right)\Lambda(\alpha_1, \alpha_2)N_{2t}^* +$$

$$N_{2t+1}\Lambda^*(\alpha_1, \alpha_2)\left(-s_{2t}, s_{2t-1}\right) + N_{2t+1}N_{2t}^*.$$

After expansion, the following is obtained:

$$r_{2t+1}r_{2t}^* - r_{2t+2}^*r_{2t-1} = \left(|\alpha_1|^2 + |\alpha_2|^2\right)\left(-s_{2t+1}s_{2t}^* + s_{2t+2}s_{2t-1}^*\right) +$$

$$\left(s_{2t+1}, s_{2t+2}\right)\Lambda(\alpha_1, \alpha_2)N_{2t}^* + N_{2t+1}\Lambda^*(\alpha_1, \alpha_2)\left(-s_{2t}, s_{2t-1}\right) + N_{2t+1}N_{2t}^*.$$

For simplicity, the following formulas are defined:

$$\mathcal{R}_2 = r_{2t+1}r_{2t}^* - r_{2t+2}^*r_{2t-1}, \text{ and}$$

$$\mathcal{N}_2 = \left(s_{2t+1}, s_{2t+2}\right)\Lambda(\alpha_1, \alpha_2)N_{2t}^* + N_{2t+1}\Lambda^*(\alpha_1, \alpha_2)\left(-s_{2t}, s_{2t-1}\right) +$$

$$N_{2t+1}N_{2t}^*.$$

The following may be obtained:

$$\mathcal{R}_2 = \left(|\alpha_1|^2 + |\alpha_2|^2\right)B(\mathcal{D}_{2t-1}) + \mathcal{N}_2.$$

In combination with the previous mathematical derivation, the following is obtained:

$$\left(\mathcal{R}_1, \mathcal{R}_2\right) = \left(|\alpha_1|^2 + |\alpha_2|^2\right)\left(A(\mathcal{D}_{2t+1}), B(\mathcal{D}_{2t+1})\right) + \left(\mathcal{N}_1, \mathcal{N}_2\right).$$

Because all coefficient vectors in a coefficient vector set $\mathcal{V}$ are equal in length and $(A(\mathcal{D}_{2t+1}), B(\mathcal{D}_{2t+1}))$ is in a one-to-one correspondence with input symbol information, a receiver selects a coefficient vector $(\tilde{A}(\mathcal{D}_{2t+1}), \tilde{B}(\mathcal{D}_{2t+1}))$ with a shortest Euclidean distance to a decisive and statistical signal vector $(\mathcal{R}_1, \mathcal{R}_2)$ as a decoding output:

$$\left(\tilde{A}(\mathcal{D}_{2t+1}), \tilde{B}(\mathcal{D}_{2t+1})\right) = \arg\min_{(A(\mathcal{D}_{2t+1}), B(\mathcal{D}_{2t+1}))\in\mathcal{V}}\left\|\left(A(\mathcal{D}_{2t+1}), B(\mathcal{D}_{2t+1})\right) - \right.$$

$$\left.\left(\mathcal{R}_1, \mathcal{R}_2\right)\right\|^2.$$

After $(A(\mathcal{D}_{2t+1}), B(\mathcal{D}_{2t+1}))$ is obtained through calculation, it is demapped to original symbols to restore original bits.

Although conventional OSTBC coding codebooks including Alamouti codes can achieve a full diversity gain and a full rate gain, the codebooks are all designed for conventional active radio frequency communication, without considering modulation characteristics and implementation complexity of passive terminals like backscatter communication. In addition, the decoder needs to know channel state information CSI between all transmit antennas and receive antennas.

Based on the NSTBC codebook proposed for backscatter communication, hardware implementation complexity is reduced, and a probability of error detection is reduced by optimizing the codebook of conventional Alamouti codes. However, this mode requires the decoder to know CSI information between all transmit antennas and receive antennas. Although the conventional Alamouti-based differential space-time block code does not require the decoder to know CSI information between all transmit antennas and receive antennas, modulation characteristics and implementation complexity of passive terminals like backscatter communication are not considered. An encoding method provided in the embodiments of this application is hereinafter described in detail by using some embodiments and application scenarios thereof with reference to the accompanying drawings.

Referring to FIG. 2, an embodiment of this application provides an encoding method. The method is performed by an encoder. The encoder may be a terminal device or a network-side device. The method includes the following steps.

Step 201: An encoder performs encoding in a DSTBC encoding mode by using an NSTBC codebook, to obtain a transmitted symbol in a current symbol period.

Step 202: The encoder determines a transmitted symbol in a symbol period next to the current symbol period based on the transmitted symbol obtained through encoding in the current symbol period and the NSTBC codebook.

In this embodiment of this application, on one hand, the transmitted symbol in the current symbol period is calculated in the DSTBC encoding mode by using the NSTBC codebook, and on the other hand, the transmitted symbol in the next symbol period is calculated by using the low-complexity NSTBC codebook. Based on a DSTBC design, neither the encoder nor a decoder needs to know CSI, that is, there is no need to transmit a pilot signal on each transmit antenna. Therefore, system overheads are reduced. In addition, based on the NSTBC codebook, a quantity or types of load impedances on each antenna can be reduced, system implementation complexity can be reduced, and a probability of error detection can be effectively reduced, while a diversity gain is ensured.

The encoding method provided in this embodiment of this application is a new encoding method obtained by combining the DSTBC encoding mode and the NSTBC codebook and extracting advantages of the two. This new encoding method may also be referred to as a differential NSTBC encoding mode.

In some specific implementations, differential NSTBC encoding is used for two-antenna transmit diversity. In other words, the differential NSTBC encoding mode in this embodiment of this application may be applied to a two-antenna transmit diversity scenario.

In some specific implementations, a modulation mode used by the encoder may include: binary phase shift keying (Binary Phase Shift Keying, BPSK), amplitude phase shift keying (Amplitude Phase Shift Keying, APSK), or multiple phase modulation keying (Multiple Phase Shift Keying, MPSK).

In some specific implementations, the NSTBC codebook is used for space-time block codes, or the NSTBC codebook is used for polarization-time block codes, that is, two transmit antennas can be isolated in space or in a polarization direction.

Polarization modes include one or more of the following:
horizontal polarization, vertical polarization, left-handed elliptical polarization, right-handed elliptical polarization, left-handed circular polarization, and right-handed circular polarization.

In a specific implementation, a codebook structure of the NSTBC codebook meets:

$$\begin{pmatrix} s_{2t+1} & s_{2t+2}^{*} \\ s_{2t+2} & -s_{2t+1}^{*} \end{pmatrix},$$

where $s_{2t+1}$ and $s_{2t+2}^{*}$ are transmitted symbols that are on two transmit antennas and that are obtained by the encoder through encoding in a $(2t+1)^{th}$ symbol period (it should be noted that the transmitted symbols may also be referred to as constellation symbols, constellation points, or the like, and the name is not specifically limited in this embodiment of this application), $s_{2t+2}$ and $-s_{2t+1}^{*}$ are transmitted symbols that are on two transmit antennas and that are obtained by the encoder through encoding in a $(2t+2)^{th}$ symbol period, the symbol $s_{2t+2}^{*}$ is a conjugate of the symbol $s_{2t+2}$, the symbol $-s_{2t+1}^{*}$ is a negative conjugate of the symbol $s_{2t+1}$, the $(2t+1)^{th}$ symbol period is the current symbol period, and the $(2t+2)^{th}$ symbol period is the symbol period next to the current symbol period.

In a specific implementation, that an encoder performs encoding in a DSTBC encoding mode by using an NSTBC codebook, to obtain a transmitted symbol in a current symbol period includes:

(1) the encoder determines an encoding coefficient vector in the current symbol period; and

(2) the encoder determines the encoded transmitted symbol in the current symbol period based on the encoding coefficient vector in the current symbol period.

Specifically, that the encoder determines an encoding coefficient vector in the current symbol period in the foregoing (1) includes:

(1.1) the encoder determines, based on formulas

$$A(\mathcal{D}_{2t+1}) = s_{2t+1}s_{2t-1}^* + s_{2t+2}^*s_{2t},$$

and

$$B(\mathcal{D}_{2t+1}) = s_{2t+1}s_{2t}^* - s_{2t+2}^*s_{2t-1},$$

an encoding coefficient vector ($A(\mathcal{D}_{2t+1})$, $B(\mathcal{D}_{2t+1})$) of the encoder in a $(2t+1)^{th}$ symbol period, where $s_{2t+1}$ and $s_{2t+2}^*$ are transmitted symbols that are on two transmit antennas and that are obtained by the encoder through encoding in the $(2t+1)^{th}$ symbol period, $s_{2t-1}$ and $s_{2t}^*$ are transmitted symbols that are on two transmit antennas and that are obtained by the encoder through encoding in a $(2t-1)^{th}$ symbol period, and $s_{2t}$ and $-s_{2t-1}^*$ are transmitted symbols that are on two transmit antennas and that are obtained by the encoder through encoding in a $2t^{th}$ symbol period.

In this embodiment of this application, the encoder calculates the encoding coefficient vector ($A(\mathcal{D}_{2t+1})$, $B(\mathcal{D}_{2t+1})$) in the current symbol period through direct calculation.

Specifically, that the encoder determines an encoding coefficient vector in the current symbol period in the foregoing (1) includes:

(1.2) the encoder determines an encoding coefficient vector ($A(\mathcal{D}_{2t+1})$, $B(\mathcal{D}_{2t+1})$) of the encoder in a $(2t+1)^{th}$ symbol period based on a preset mapping table between original bits or original symbols and the encoding coefficient vector, where
the preset mapping table includes a mapping relationship between the original bits or the original symbols and the ($A(\mathcal{D}_{2t+1})$, $B(\mathcal{D}_{2t+1})$) after initial reference symbols are determined.

The original bits or the original symbols refer to initial data bits or initial symbols to be encoded, and the initial reference symbols refer to reference symbols on the transmit antennas in an initial symbol period, that is, in a first symbol period.

In this embodiment of this application, the encoder determines ($A(\mathcal{D}_{2t+1})$, $B(\mathcal{D}_{2t+1})$) by directly querying a mapping table.

Specifically, that the encoder determines the encoded transmitted symbol in the current symbol period based on the encoding coefficient vector in the current symbol period in the foregoing (2) includes:

(2.1) the encoder determines, based on a formula

$$(s_{2t+1}, s_{2t+2}^*) = A(\mathcal{D}_{2t+1})(s_{2t-1}, s_{2t}^*) + B(\mathcal{D}_{2t+1})(s_{2t}, -s_{2t-1}^*),$$

transmitted symbols that are on two transmit antennas and that are obtained by the encoder through encoding in a $(2t+1)^{th}$ symbol period, where

$$\left(A(\mathcal{D}_{2t+1}), B(\mathcal{D}_{2t+1})\right)$$

is an encoding coefficient vector in the $(2t+1)^{th}$ symbol period that is determined by the encoder, $s_{2t-1}$ and $s_{2t}^*$ are transmitted symbols that are on two transmit antennas and that are obtained by the encoder through encoding in a $(2t-1)^{th}$ symbol period, and $s_{2t}$ and $-s_{2t-1}^*$ are transmitted symbols that are on two transmit antennas and that are obtained by the encoder through encoding in a $2t^{th}$ symbol period.

In this embodiment of this application, the encoder calculates the transmitted symbol in the current symbol period based on the encoding coefficient vector in the current symbol period and transmitted symbols in two symbol periods previous to the current symbol period.

For example, assuming that symbols transmitted on a first antenna and a second antenna in the $(2t-1)^{th}$ symbol period are $s_{2t-1}$ and $s_{2t}^*$ respectively, symbols transmitted on the first antenna and the second antenna in the $2t^{th}$ symbol period are $s_{2t}$ and $-s_{2t-1}^*$ respectively, that is, signals transmitted on the two antennas by a transmit end in the $(2t-1)^{th}$ and $2t^{th}$ symbol periods meet:

$$\begin{pmatrix} s_{2t-1} & s_{2t}^* \\ s_{2t} & -s_{2t-1}^* \end{pmatrix}.$$

In the $(2t+1)^{th}$ symbol period, a group of 2m bits arrives at the encoder, and a corresponding coefficient vector $(A(\mathcal{D}_{2t+1}), B(\mathcal{D}_{2t+1}))$ is generated according to a mapping relationship $\mathcal{M}$ (for example, a preset mapping table is queried); and the encoder calculates, based on symbol vectors transmitted in the previous two symbol periods and the current coefficient vector $(A(\mathcal{D}_{2t+1}), B(\mathcal{D}_{2t+1}))$, symbols transmitted at a current moment:

$$(s_{2t+1}, s_{2t+2}^*) = A(\mathcal{D}_{2t+1})(s_{2t-1}, s_{2t}^*) + B(\mathcal{D}_{2t+1})(s_{2t}, -s_{2t-1}^*).$$

In addition, in the $(2t+2)^{th}$ symbol period, symbols transmitted on the two antennas are $(s_{2t+2}, -s2t+1^*)$. The coefficient vector $(A(\mathcal{D}_{2t+1}), B(\mathcal{D}_{2t+1}))$ and a current input symbol meet the following relationships:

$$A(\mathcal{D}_{2t+1}) = s_{2t+1}s_{2t-1}^* + s_{2t+2}^*s_{2t},$$

and

$$B(\mathcal{D}_{2t+1}) = s_{2t+1}s_{2t}^* - s_{2t+2}^*s_{2t-1}.$$

In a specific implementation, the method further includes:
the encoder determines that transmitted symbols that are on two transmit antennas and that are obtained by the encoder through encoding in a first symbol period are $(s_1, s_2^*)$, and that transmitted symbols that are on two transmit antennas and that are obtained by the encoder through encoding in a second symbol period are $(s_2, -s_1^*)$, where

$$(s_1, s_2^*) \text{ and } (s_2, -s_1^*)$$

meet the following NSTBC codebook:

$$\begin{pmatrix} s_1 & s_2^* \\ s_2 & -s_1^* \end{pmatrix};$$

and

$$(s_1, s_2^*)$$

are determined initial reference symbols.

The foregoing describes a process in which the encoder performs encoding in the $(2t+1)^{th}$ symbol period to obtain the transmitted symbols on the two transmit antennas. Differential NSTBC encoding transmission of all to-be-transmitted information bits may be completed by repeating the foregoing process.

It should be noted that, according to the foregoing process, it can be found that in differential NSTBC encoding, two symbols can be encoded in one symbol period, and transmitted symbols in two symbol periods need to be encoded only once (because the transmitted symbol in the next symbol period can be determined based on the transmitted symbol in the current symbol period and the NSTBC codebook), and the next symbol period is redundancy of the previous symbol period. Therefore, in a practical application scenario, a delayer may be disposed. By using the differential NSTBC encoding method, encoding processing is performed from the $(2t+1)^{th}$ symbol period, then a time delay of one symbol period is recorded by using the delayer, and then encoding processing is performed from a $(2t+3)^{th}$ symbol period by using the differential NSTBC encoding method, because the transmitted symbol in the $(2t+1)^{th}$ symbol period and the transmitted symbol in the $(2t+2)^{th}$ symbol period can be determined in one encoding process.

The technical solutions in the embodiments of this application are hereinafter described with reference to specific implementations.

In an implementation, BPSK is used as an example to describe a differential NSTBC encoding process. Assuming that BPSK modulation is used, a set of constellation points is $\left\{\frac{-1}{\sqrt{2}}, \frac{1}{\sqrt{2}}\right\}$, where $\sqrt{2}$ in the set of constellation points is to ensure normalization processing of transmit power, and a set of encoding coefficient vectors is $\mathcal{V}$. Assuming that two initial reference modulation signals are $s_1 = s_2 = \frac{1}{\sqrt{2}}$, and that two input information bits at an input end of an encoder are $c_1$ and $c_2$, the first bit $c_1$ is mapped to a symbol $s_3$, and the second bit $c_2$ is mapped to a symbol $s_4$, and the symbols $s_3$ and $s_4$ are both BPSK constellation points. A mapping relationship is:

$$c_1 \rightarrow s_3 = \frac{(-1)^{c_1}}{\sqrt{2}}, c_1 = \{0,1\},$$

and

$$c_2 \rightarrow s_4 = \frac{(-1)^{c_2}}{\sqrt{2}}, c_2 = \{0,1\}.$$

According to a definition of an encoding coefficient vector,

$$A(\mathcal{D}_3) = s_3 s_1^* + s_4^* s_2, \text{ and}$$

$$B(\mathcal{D}_3) = s_3 s_2^* - s_4^* s_1.$$

Based on different values of the input bits $c_1$ and $c_2$, a mapping table between the input bits and $(A(\mathcal{D}_3), B(\mathcal{D}_3))$ may be obtained:

| Input bits $(c_1, c_2)$ | Encoding coefficient vector (A, B) |
|---|---|
| (0, 0) | (1, 0) |
| (1, 0) | (0, -1) |
| (0, 1) | (0, 1) |
| (1, 1) | (-1, 0) |

Assuming that transmitted symbols on two transmit antennas in a $(2t - 1)^{th}$ symbol period are:

$$s_{2t-1} = \frac{1}{\sqrt{2}} \text{ and } s_{2t}^* = \frac{-1}{\sqrt{2}},$$

according to an NSTBC encoding rule, transmitted symbols on two transmit antennas in a $(2t)^{th}$ symbol period are:

$$s_{2t} = \frac{-1}{\sqrt{2}} \text{ and } -s_{2t-1}^* = \frac{-1}{\sqrt{2}}.$$

Assuming that in a $(2t + 1)^{th}$ symbol period, input bits arriving at the encoder are 10, according to a mapping rule between the input bits and the encoding coefficient vector, the following is obtained:

$$\mathcal{M}(1,0) = (0, -1).$$

Therefore, $(A(\mathcal{D}_{2t+1}), B(\mathcal{D}_{2t+1})) = (0, -1)$. The encoder calculates, based on symbol vectors transmitted in the previous two symbol periods and the current encoding coefficient vector $(A(\mathcal{D}_{2t+1}), B(\mathcal{D}_{2t+1}))$, symbols transmitted at a current moment:

$$(s_{2t+1}, s_{2t+2}^*) = 0 \cdot \left(\frac{1}{\sqrt{2}}, \frac{-1}{\sqrt{2}}\right) - 1 \cdot \left(-\frac{1}{\sqrt{2}}, -\frac{1}{\sqrt{2}}\right) = \left(\frac{1}{\sqrt{2}}, \frac{1}{\sqrt{2}}\right).$$

In a $(2t + 2)^{th}$ symbol period, according to the NSTBC encoding rule, transmitted symbols on two transmit antennas are:

$$s_{2t+2} = \frac{1}{\sqrt{2}} \text{ and } -s_{2t+1}^* = \frac{-1}{\sqrt{2}}.$$

The foregoing process is repeated to complete differential NSTBC transmission.

The encoding method provided in this embodiment of this application may be performed by an encoding apparatus. An encoding apparatus provided in an embodiment of this application is described by assuming that the encoding apparatus performs the encoding method in this embodiment of this application.

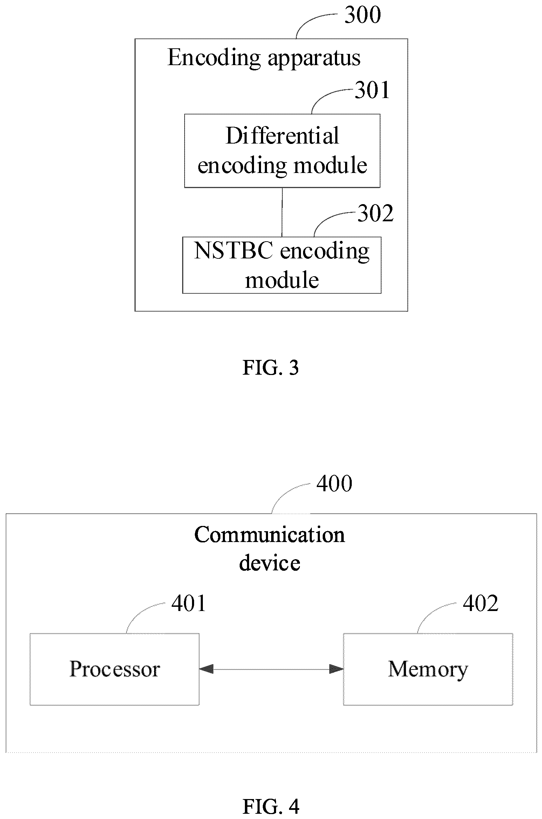

As shown in FIG. 3, an embodiment of this application provides an encoding apparatus 300, including:

a differential encoding module 301, configured to perform, by an encoder, encoding in a DSTBC encoding mode by using an NSTBC codebook, to obtain a transmitted symbol in a current symbol period; and
an NSTBC encoding module 302, configured to determine, by the encoder, a transmitted symbol in a symbol period next to the current symbol period based on the transmitted symbol obtained through encoding in the current symbol period and the NSTBC codebook.

In this embodiment of this application, on one hand, the transmitted symbol in the current symbol period is calculated in the DSTBC encoding mode by using the NSTBC codebook, and on the other hand, the transmitted symbol in the next symbol period is calculated by using the low-complexity NSTBC codebook. Based on a DSTBC design, neither the encoder nor a decoder needs to know CSI, that is, there is no need to transmit a pilot signal on each transmit antenna. Therefore, system overheads are reduced. In addition, based on the NSTBC codebook, a quantity or types of load impedances on each antenna can be reduced, system implementation complexity can be reduced, and a probability of error detection can be effectively reduced, while a diversity gain is ensured.

In a specific implementation, a codebook structure of the NSTBC codebook meets:

$$\begin{pmatrix} s_{2t+1} & s^*_{2t+2} \\ s_{2t+2} & -s^*_{2t+1} \end{pmatrix},$$

where $s_{2t+1}$ and $s^*_{2t+2}$ are transmitted symbols that are on two transmit antennas and that are obtained by the encoder through encoding in a $(2t+1)^{\text{th}}$ symbol period, $s_{2t+2}$ and $-s^*_{2t+1}$ are transmitted symbols that are on two transmit antennas and that are obtained by the encoder through encoding in a $(2t+2)^{\text{th}}$ symbol period, the symbol $s^*_{2t+2}$ is a conjugate of the symbol $s_{2t+2}$, the symbol $-s^*_{2t+1}$ is a negative conjugate of the symbol $s_{2t+1}$, the $(2t+1)^{\text{th}}$ symbol period is the current symbol period, and the $(2t+2)^{\text{th}}$ symbol period is the symbol period next to the current symbol period.

In a specific implementation, the differential encoding module and the NSTBC encoding module are specifically configured to:

determine, by the encoder, an encoding coefficient vector in the current symbol period; and determine the encoded transmitted symbol in the current symbol period; and
determine, by the encoder, the transmitted symbol in the symbol period next to the current symbol period based on the transmitted symbol obtained through encoding in the current symbol period.

In a specific implementation, the differential encoding module is specifically configured to:

determine, by the encoder based on a formula

$$(s_{2t+1}, s^*_{2t+2}) = A(\mathcal{D}_{2t+1})(s_{2t-1}, s^*_{2t}) + B(\mathcal{D}_{2t+1})(s_{2t}, -s^*_{2t-1}),$$

transmitted symbols that are on two transmit antennas and that are obtained by the encoder through encoding in a $(2t+1)^{\text{th}}$ symbol period, where

$$\left(A(\mathcal{D}_{2t+1}), B(\mathcal{D}_{2t+1})\right)$$

is an encoding coefficient vector in the $(2t+1)^{\text{th}}$ symbol period that is determined by the encoder, $s_{2t-1}$ and $s^*_{2t}$ are transmitted symbols that are on two transmit antennas and that are obtained by the encoder through encoding in a $(2t-1)^{\text{th}}$ symbol period, and $s_{2t}$ and $-s^*_{2t-1}$ are transmitted symbols that are on two transmit antennas and that are obtained by the encoder through encoding in a $2t^{\text{th}}$ symbol period.

In a specific implementation, the differential encoding module is specifically configured to:

determine, by the encoder based on formulas

$$A(\mathcal{D}_{2t+1}) = s_{2t+1}s^*_{2t-1} + s^*_{2t+2}s_{2t},$$

and

$$B(\mathcal{D}_{2t+1}) = s_{2t+1}s_{2t}^* - s_{2t+2}^*s_{2t-1},$$

an encoding coefficient vector ($A(\mathcal{D}_{2t+1})$, $B(\mathcal{D}_{2t+1})$) of the encoder in a $(2t+1)^{th}$ symbol period, where $s_{2t+1}$ and $s_{2t+2}^*$ are transmitted symbols that are on two transmit antennas and that are obtained by the encoder through encoding in the $(2t+1)^{th}$ symbol period, $s_{2t-1}$ and $s_{2t}^*$ are transmitted symbols that are on two transmit antennas and that are obtained by the encoder through encoding in a $(2t-1)^{th}$ symbol period, and $s_{2t}$ and $-s_{2t-1}^*$ are transmitted symbols that are on two transmit antennas and that are obtained by the encoder through encoding in a $2t^{th}$ symbol period.

In a specific implementation, the differential encoding module is specifically configured to:

determine, by the encoder, an encoding coefficient vector ($A(\mathcal{D}_{2t+1})$, $B(\mathcal{D}_{2t+1})$) of the encoder in a $(2t+1)^{th}$ symbol period based on a preset mapping table between original bits or original symbols and the encoding coefficient vector, where

the preset mapping table includes a mapping relationship between the original bits and the ($A(\mathcal{D}_{2t+1})$. $B(\mathcal{D}_{2t+1})$) after initial reference symbols are determined.

In a specific implementation, the NSTBC encoding module is specifically configured to:

determine, by the encoder, the transmitted symbol in the symbol period next to the current symbol period based on the transmitted symbol obtained through encoding in the current symbol period and the NSTBC codebook; and after obtaining, through encoding, transmitted symbols $s_{2t+1}$ and $s_{2t+2}^*$ on two transmit antennas in a $(2t+1)^{th}$ symbol period, obtain, by the encoder through encoding according to a structure of the NSTBC codebook

$$\begin{pmatrix} s_{2t+1} & s_{2t+2}^* \\ s_{2t+2} & -s_{2t+1}^* \end{pmatrix},$$

transmitted symbols $s_{2t+2}$ and $-s_{2t+1}^*$ on two transmit antennas in a $(2t+2)^{th}$ symbol period.

In a specific implementation, the apparatus further includes:
a first determining module, configured to determine, by the encoder, that transmitted symbols that are on two transmit antennas and that are obtained by the encoder through encoding in a first symbol period are ($s_1$, $s_2^*$ ), and that transmitted symbols that are on two transmit antennas and that are obtained by the encoder through encoding in a second symbol period are ($s_2$, $-s_1^*$ ), where

$$(s_1, s_2^*) \text{ and } (s_2, -s_1^*)$$

meet the following NSTBC codebook:

$$\begin{pmatrix} s_1 & s_2^* \\ s_2 & -s_1^* \end{pmatrix};$$

and

($s_1$, $s_2^*$ ) are determined initial reference symbols.
In a specific implementation, the differential NSTBC encoding is used for two-antenna transmit diversity.

In a specific implementation, the NSTBC codebook is used for space-time block codes, or the NSTBC codebook is used for polarization-time block codes, that is, two transmit antennas can be isolated in space or in a polarization direction.

The encoding apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal. The other devices may be a server, a network attached storage (Network Attached Storage, NAS), and the like. This is not specifically limited in this embodiment of this application.

The encoding apparatus provided in this embodiment of this application can implement each process implemented by the method embodiment in FIG. 2, with the same technical effect achieved. To avoid repetition, details are not described herein again.

Optionally, as shown in FIG. 4, an embodiment of this application further provides a communication device 400, including a processor 401 and a memory 402. The memory 402 stores a program or instructions capable of running on the processor 401. For example, when the communication device 400 is a terminal, and the program or instructions are executed by the processor 401, each step of the foregoing embodiment of the encoding method is implemented, with the same technical effect achieved. When the communication device 400 is a network-side device, and the program or instructions are executed by the processor 401, each step of the foregoing embodiment of the encoding method is implemented, with the same technical effect achieved. To avoid repetition, details are not described herein again.

An embodiment of this application further provides an encoder, including a processor and a communication interface. The processor is configured to perform, by the encoder, encoding in a DSTBC encoding mode by using an NSTBC codebook, to obtain a transmitted symbol in a current symbol period; and determine, by the encoder, a transmitted symbol in a symbol period next to the current symbol period based on the transmitted symbol obtained through encoding in the current symbol period and the NSTBC codebook.

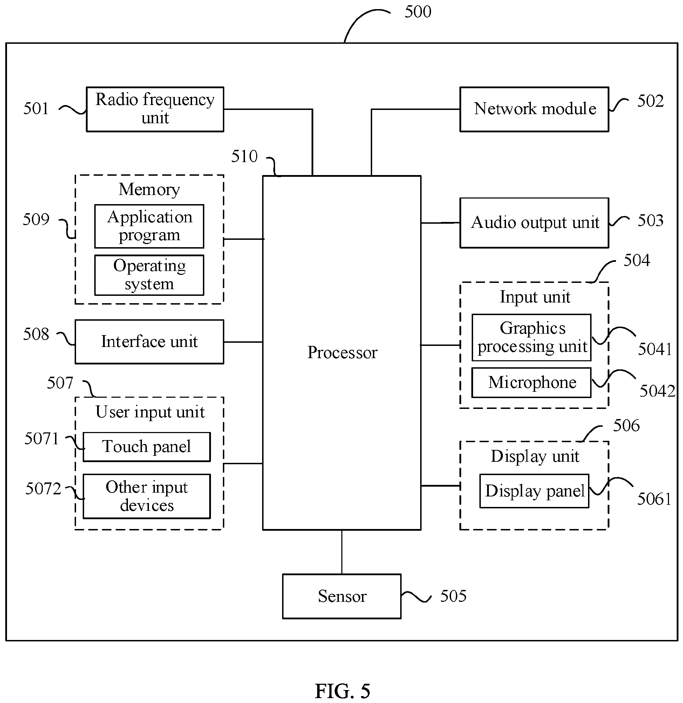

Specifically, for a case that the encoder is a terminal, FIG. 5 is a schematic diagram of a hardware structure of a terminal for implementing an embodiment of this application.

The terminal 500 includes but is not limited to at least some components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (for example, a battery) supplying power to all components. Optionally, the power supply may be logically connected to the processor 510 through a power management system. In this way, functions such as charge management, discharge management, and power consumption management are implemented by using the power management system. The terminal structure shown in FIG. 5 does not constitute a limitation on the terminal. The terminal may include more or fewer components than those shown in the figure, or some components are combined, or component arrangements are different. Details are not described herein again.

It should be understood that, in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 501 may transmit the downlink data to the processor 510 for processing. In addition, the radio frequency unit 501 may send uplink data to the network-side device. Usually, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may primarily include a first storage area for storing programs or instructions and a second storage area for storing data. The first storage area may store an operating system, an application program or instructions required by at least one function (such as an audio play function and an image play function), and the like. In addition, the memory 59 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory x09 in this embodiment of this application includes but is not limited to these and any other suitable types of memories.

The processor 510 may include one or more processing units. Optionally, the processor 510 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 510.

The processor 510 is configured to perform, by an encoder, encoding in a DSTBC encoding mode by using an NSTBC codebook, to obtain a transmitted symbol in a current symbol period.

The processor 510 is configured to determine, by the encoder, a transmitted symbol in a symbol period next to the current symbol period based on the transmitted symbol obtained through encoding in the current symbol period and the NSTBC codebook.

In this embodiment of this application, on one hand, the transmitted symbol in the current symbol period is calculated in the DSTBC encoding mode by using the NSTBC codebook, and on the other hand, the transmitted symbol in the next symbol period is calculated by using the low-complexity NSTBC codebook. Based on a DSTBC design, neither the encoder nor a decoder needs to know CSI, that is, there is no need to transmit a pilot signal on each transmit antenna. Therefore, system overheads are reduced. In addition, based on the NSTBC codebook, a quantity or types of load impedances on each antenna can be reduced, system implementation complexity can be reduced, and a probability of error detection can be effectively reduced, while a diversity gain is ensured.

Specifically, a codebook structure of the NSTBC codebook meets:

$$\begin{pmatrix} s_{2t+1} & s^*_{2t+2} \\ s_{2t+2} & -s^*_{2t+1} \end{pmatrix},$$

where $s_{2t+1}$ and $s^*_{2t+2}$ are transmitted symbols that are on two transmit antennas and that are obtained by the encoder through encoding in a $(2t+1)^{th}$ symbol period, $s_{2t+2}$ and $-s^*_{2t+1}$ are transmitted symbols that are on two transmit antennas and that are obtained by the encoder through encoding in a $(2t+2)^{th}$ symbol period, the symbol $s^*_{2t+2}$ is a conjugate of the symbol $s_{2t+2}$, the symbol $-s^*_{2t+1}$ is a negative conjugate of the symbol $s_{2t+1}$, the $(2t+1)^{th}$ symbol period is the current symbol period, and the $(2t+2)^{th}$ symbol period is the symbol period next to the current symbol period.

Specifically, the processor 510 is specifically configured to:

determine, by the encoder, an encoding coefficient vector in the current symbol period; and
determine, by the encoder, the encoded transmitted symbol in the symbol period next to the current symbol period based on the encoding coefficient vector in the current symbol period.

Specifically, the processor 510 is specifically configured to:

determine, by the encoder based on a formula

$$(s_{2t+1}, s^*_{2t+2}) = A(\mathcal{D}_{2t+1})(s_{2t-1}, s^*_{2t}) + B(\mathcal{D}_{2t+1})(s_{2t}, -s^*_{2t-1}),$$

transmitted symbols that are on two transmit antennas and that are obtained by the encoder through encoding in a $(2t+1)^{th}$ symbol period, where

$$\left( A(\mathcal{D}_{2t+1}), B(\mathcal{D}_{2t+1}) \right)$$

is an encoding coefficient vector in the $(2t+1)^{th}$ symbol period that is determined by the encoder, $s_{2t-1}$ and $s_{2t}^*$ are transmitted symbols that are on two transmit antennas and that are obtained by the encoder through encoding in a $(2t-1)^{th}$ symbol period, and $s_{2t}$ and $-s_{2t-1}^*$ are transmitted symbols that are on two transmit antennas and that are obtained by the encoder through encoding in a $2t^{th}$ symbol period.

Specifically, the processor 510 is specifically configured to:

determine, by the encoder based on formulas

$$A(\mathcal{D}_{2t+1}) = s_{2t+1}s_{2t-1}^* + s_{2t+2}^*s_{2t},$$

and

$$B(\mathcal{D}_{2t+1}) = s_{2t+1}s_{2t}^* - s_{2t+2}^*s_{2t-1},$$

an encoding coefficient vector $(A(\mathcal{D}_{2t+1}), B(\mathcal{D}_{2t+1}))$ of the encoder in a $(2t+1)^{th}$ symbol period, where

$$s_{2t+1} \text{ and } s_{2t+2}^*$$

are transmitted symbols that are on two transmit antennas and that are obtained by the encoder through encoding in the $(2t+1)^{th}$ symbol period, $s_{2t-1}$ and $s_{2t}^*$ are transmitted symbols that are on two transmit antennas and that are obtained by the encoder through encoding in a $(2t-1)^{th}$ symbol period, and $s_{2t}$ and $-s_{2t-1}^*$ are transmitted symbols that are on two transmit antennas and that are obtained by the encoder through encoding in a $2t^{th}$ symbol period.

Specifically, the processor 510 is specifically configured to:

determine, by the encoder, an encoding coefficient vector $(A(\mathcal{D}_{2t+1}), B(\mathcal{D}_{2t+1}))$ of the encoder in a $(2t+1)^{th}$ symbol period based on a preset mapping table between original bits or original symbols and the encoding coefficient vector, where

the preset mapping table includes a mapping relationship between the original bits and the $(A(\mathcal{D}_{2t+1}), B(\mathcal{D}_{2t+1}))$ after initial reference symbols are determined.

Specifically, the processor 510 is specifically configured to:

determine, by the encoder, that transmitted symbols that are on two transmit antennas and that are obtained by the encoder through encoding in a first symbol period are $(s_1, s_2^*)$, and that transmitted symbols that are on two transmit antennas and that are obtained by the encoder through encoding in a second symbol period are $(s_2, -s_1^*)$, where

$$(s_1, s_2^*) \text{ and } (s_2, -s_1^*)$$

meet the following NSTBC codebook:

$$\begin{pmatrix} s_1 & s_2^* \\ s_2 & -s_1^* \end{pmatrix};$$

and

$(s_1, \overset{*}{S}_2$ ) are determined initial reference symbols.

Specifically, the differential NSTBC encoding is used for two-antenna transmit diversity.

Specifically, the NSTBC codebook is used for space-time block codes, or the NSTBC codebook is used for polarization-time block codes, that is, two transmit antennas can be isolated in space or in a polarization direction.

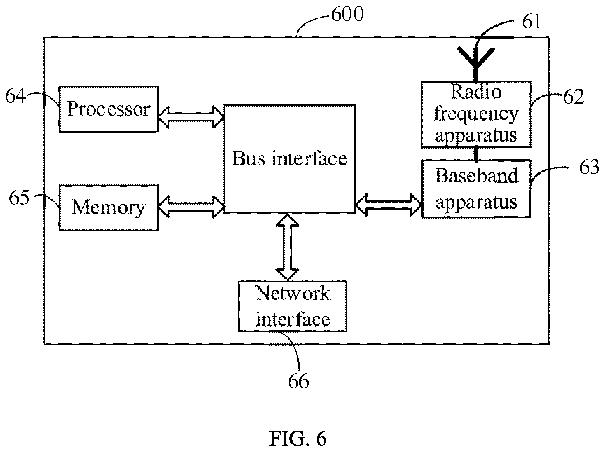

Specifically, in a case that the encoder is a network-side device, as shown in FIG. 6, the network-side device 600 includes an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information by using the antenna 61, and sends the received information to the baseband apparatus 63 for processing. In a downlink direction, the baseband apparatus 63 processes to-be-sent information, and sends the information to the radio frequency apparatus 62; and the radio frequency apparatus 62 processes the received information and then sends the information out by using the antenna 61.

The method in the foregoing method embodiment may be implemented in the baseband apparatus 63. The baseband apparatus 63 includes a baseband processor.

The baseband apparatus 63 may include, for example, at least one baseband unit, where a plurality of chips are disposed on the baseband unit. As shown in FIG. 6, one of the chips is, for example, the baseband processor, connected to the memory 65 by using a bus interface, to invoke a program in the memory 65 to perform the operation of the network-side device shown in the foregoing method embodiment.

The network-side device may further include a network interface 66, where the interface is, for example, a common public radio interface (common public radio interface, CPRI).

Specifically, the network-side device 600 in this embodiment of the present invention further includes a program or instructions stored in the memory 65 and capable of running on the processor 64. When the processor 64 invokes the program or instructions in the memory 65, the method performed by each module shown in FIG. 3 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the encoding method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the encoding method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program product. The computer program product is stored in a storage medium. The computer program product is executed by at least one processor to implement each process of the foregoing embodiment of the encoding method, with the same technical effect achieved. To avoid repetition, details are not described herein again.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. An encoding method, comprising:

   performing, by an encoder, encoding in a differential space-time block code DSTBC encoding mode by using a new space-time block code NSTBC codebook, to obtain a transmitted symbol in a current symbol period; and
   determining, by the encoder, a transmitted symbol in a symbol period next to the current symbol period based on the transmitted symbol obtained through encoding in the current symbol period and the NSTBC codebook.

2. The method according to claim 1, wherein a codebook structure of the NSTBC codebook meets:

$$\begin{pmatrix} s_{2t+1} & s_{2t+2}^* \\ s_{2t+2} & -s_{2t+1}^* \end{pmatrix},$$

   wherein $s_{2t+1}$ and $s_{2t+2}^*$ are transmitted symbols that are on two transmit antennas and that are obtained by the encoder through encoding in a $(2t+1)^{th}$ symbol period, $s_{2t+2}$ and $-s_{2t+1}^*$ are transmitted symbols that are on two transmit antennas and that are obtained by the encoder through encoding in a $(2t+2)^{th}$ symbol period, the symbol $s_{2t+2}^*$ is a conjugate of the symbol $s_{2t+2}$, the symbol $-s_{2t+1}^*$ is a negative conjugate of the symbol $s_{2t+1}$, the $(2t+1)^{th}$ symbol period is the current symbol period, and the $(2t+2)^{th}$ symbol period is the symbol period next to the current symbol period.

3. The method according to claim 1, wherein the performing, by an encoder, encoding in a DSTBC encoding mode by using an NSTBC codebook, to obtain a transmitted symbol in a current symbol period comprises:

   determining, by the encoder, an encoding coefficient vector in the current symbol period; and
   determining, by the encoder, the encoded transmitted symbol in the current symbol period based on the encoding coefficient vector in the current symbol period.

4. The method according to claim 3, wherein the determining, by the encoder, the encoded transmitted symbol in the current symbol period based on the encoding coefficient vector in the current symbol period comprises:

   determining, by the encoder based on a formula

$$(s_{2t+1}, s_{2t+2}^*) = A(\mathcal{D}_{2t+1})(s_{2t-1}, s_{2t}^*) + B(\mathcal{D}_{2t+1})(s_{2t}, -s_{2t-1}^*),$$

   transmitted symbols that are on two transmit antennas and that are obtained by the encoder through encoding in a $(2t+1)^{th}$ symbol period, wherein

   $(A(\mathcal{D}_{2t+1}), B(\mathcal{D}_{2t+1}))$ is an encoding coefficient vector in the $(2t+1)^{th}$ symbol period that is determined by the

encoder, $s_{2t-1}$ and $s_{2t}^*$ are transmitted symbols that are on two transmit antennas and that are obtained by the encoder through encoding in a (2t-1)$^{th}$ symbol period, and $s_{2t}$ and $-s_{2t-1}^*$ are transmitted symbols that are on two transmit antennas and that are obtained by the encoder through encoding in a 2t$^{th}$ symbol period.

5. The method according to claim 3, wherein the determining, by the encoder, an encoding coefficient vector in the current symbol period comprises:

determining, by the encoder based on formulas

$$A(\mathcal{D}_{2t+1}) = s_{2t+1}s_{2t-1}^* + s_{2t+2}^*s_{2t},$$

$$B(\mathcal{D}_{2t+1}) = s_{2t+1}s_{2t}^* - s_{2t+2}^*s_{2t-1},$$

an encoding coefficient vector (A($\mathcal{D}_{2t+1}$), B($\mathcal{D}_{2t+1}$)) of the encoder in a (2t+1)$^{th}$ symbol period, wherein $s_{2t+1}$ and $s_{2t+2}^*$ are transmitted symbols that are on two transmit antennas and that are obtained by the encoder through encoding in the (2t+1)$^{th}$ symbol period, $s_{2t-1}$ and $s_{2t}^*$ are transmitted symbols that are on two transmit antennas and that are obtained by the encoder through encoding in a (2t-1)$^{th}$ symbol period, and $s_{2t}$ and $-s_{2t-1}^*$ are transmitted symbols that are on two transmit antennas and that are obtained by the encoder through encoding in a 2t$^{th}$ symbol period.

6. The method according to claim 3, wherein the determining, by the encoder, an encoding coefficient vector in the current symbol period further comprises:

determining, by the encoder, an encoding coefficient vector (A($\mathcal{D}_{2t+1}$), B($\mathcal{D}_{2t+1}$)) of the encoder in a (2t+1)$^{th}$ symbol period based on a preset mapping table between original bits or original symbols and the encoding coefficient vector, wherein
the preset mapping table comprises a mapping relationship between the original bits or the original symbols and the (A($\mathcal{D}_{2t+1}$), B($\mathcal{D}_{2t+1}$)) after initial reference symbols are determined.

7. The method according to claim 1, wherein the method further comprises:

determining, by the encoder, that transmitted symbols that are on two transmit antennas and that are obtained by the encoder through encoding in a first symbol period are ($s_1$, $s_2^*$ ), and that transmitted symbols that are on two transmit antennas and that are obtained by the encoder through encoding in a second symbol period are ($s_2$, $-s_1^*$ ), wherein

$$(s_1, s_2^*) \text{ and } (s_2, -s_1^*)$$

meet the following NSTBC codebook:

$$\begin{pmatrix} s_1 & s_2^* \\ s_2 & -s_1^* \end{pmatrix};$$

and
($s_1$, $s_2^*$ ) are determined initial reference symbols.

8. The method according to any one of claims 1 to 7, wherein
the NSTBC codebook is used for space-time block codes, or the NSTBC codebook is used for polarization-time block codes.

9. An encoding apparatus, comprising:

a differential encoding module, configured to perform, by an encoder, encoding in a DSTBC encoding mode by using an NSTBC codebook, to obtain a transmitted symbol in a current symbol period; and
an NSTBC encoding module, configured to determine, by the encoder, a transmitted symbol in a symbol period next to the current symbol period based on the transmitted symbol obtained through encoding in the current symbol period and the NSTBC codebook.

10. The apparatus according to claim 9, wherein a codebook structure of the NSTBC codebook meets:

$$\begin{pmatrix} s_{2t+1} & s_{2t+2}^* \\ s_{2t+2} & -s_{2t+1}^* \end{pmatrix},$$

wherein $s_{2t+1}$ and $s_{2t+2}^*$ are transmitted symbols that are on two transmit antennas and that are obtained by the encoder through encoding in a $(2t+1)^{th}$ symbol period, $s_{2t+2}$ and $-s_{2t+1}^*$ are transmitted symbols that are on two transmit antennas and that are obtained by the encoder through encoding in a $(2t+2)^{th}$ symbol period, the symbol $s_{2t+2}^*$ is a conjugate of the symbol $s_{2t+2}$, the symbol $-s_{2t+1}^*$ is a negative conjugate of the symbol $s_{2t+1}$, the $(2t+1)^{th}$ symbol period is the current symbol period, and the $(2t+2)^{th}$ symbol period is the symbol period next to the current symbol period.

11. The apparatus according to claim 9, wherein the differential encoding module is specifically configured to:

determine, by the encoder, an encoding coefficient vector in the current symbol period; and
determine, by the encoder, the encoded transmitted symbol in the current symbol period based on the encoding coefficient vector in the current symbol period.

12. The apparatus according to claim 11, wherein the differential encoding module is specifically configured to:

determine, by the encoder based on a formula

$$(s_{2t+1}, s_{2t+2}^*) = A(\mathcal{D}_{2t+1})(s_{2t-1}, s_{2t}^*) + B(\mathcal{D}_{2t+1})(s_{2t}, -s_{2t-1}^*),$$

transmitted symbols that are on two transmit antennas and that are obtained by the encoder through encoding in a $(2t+1)^{th}$ symbol period, wherein

$(A(\mathcal{D}_{2t+1}), B(\mathcal{D}_{2t+1}))$ is an encoding coefficient vector in the $(2t+1)^{th}$ symbol period that is determined by the encoder, $s_{2t-1}$ and $s_{2t}^*$ are transmitted symbols that are on two transmit antennas and that are obtained by the encoder through encoding in a $(2t-1)^{th}$ symbol period, and $s_{2t}$ and $-s_{2t-1}^*$ are transmitted symbols that are on two transmit antennas and that are obtained by the encoder through encoding in a $2t^{th}$ symbol period.

13. The apparatus according to claim 11, wherein the differential encoding module is specifically configured to:

determine, by the encoder based on formulas

$$A(\mathcal{D}_{2t+1}) = s_{2t+1} s_{2t-1}^* + s_{2t+2}^* s_{2t},$$

and

$$B(\mathcal{D}_{2t+1}) = s_{2t+1}s_{2t}^* - s_{2t+2}^*s_{2t-1},$$

an encoding coefficient vector $(A(\mathcal{D}_{2t+1}), B(\mathcal{D}_{2t+1}))$ of the encoder in a $(2t+1)^{th}$ symbol period, wherein $s_{2t+1}$ and $s_{2t+2}^*$ are transmitted symbols that are on two transmit antennas and that are obtained by the encoder through encoding in the $(2t+1)^{th}$ symbol period, $s_{2t-1}$ and $s_{2t}^*$ are transmitted symbols that are on two transmit antennas and that are obtained by the encoder through encoding in a $(2t-1)^{th}$ symbol period, and $s_{2t}$ and $-s_{2t-1}^*$ are transmitted symbols that are on two transmit antennas and that are obtained by the encoder through encoding in a $2t^{th}$ symbol period.

14. The apparatus according to claim 11, wherein the differential encoding module is specifically configured to:

> determine, by the encoder, an encoding coefficient vector $(A(\mathcal{D}_{2t+1}), B(\mathcal{D}_{2t+1}))$ of the encoder in a $(2t+1)^{th}$ symbol period based on a preset mapping table between original bits or original symbols and the encoding coefficient vector, wherein
> the preset mapping table comprises a mapping relationship between the original bits or the original symbols and the $(A(\mathcal{D}_{2t+1}), B(\mathcal{D}_{2t+1}))$ after initial reference symbols are determined.

15. The apparatus according to claim 9, wherein the apparatus further comprises:

> a first determining module, configured to determine, by the encoder, that transmitted symbols that are on two transmit antennas and that are obtained by the encoder through encoding in a first symbol period are $(s_1, s_2^*)$, and that transmitted symbols that are on two transmit antennas and that are obtained by the encoder through encoding in a second symbol period are $(s_2, -s_1^*)$, wherein
>
> $$(s_1, s_2^*) \text{ and } (s_2, -s_1^*)$$
>
> meet the following NSTBC codebook:
>
> $$\begin{pmatrix} s_1 & s_2^* \\ s_2 & -s_1^* \end{pmatrix};$$
>
> and
> $(s_1, s_2^*)$ are determined initial reference symbols.

16. The apparatus according to any one of claims 1 to 15, wherein
the NSTBC codebook is used for space-time block codes, or the NSTBC codebook is used for polarization-time block codes.

17. An encoder, comprising a processor and a memory, wherein the memory stores a program or instructions capable of running on the processor, and when the program or instructions are executed by the processor, the steps of the encoding method according to any one of claims 1 to 8 are implemented.

18. A readable storage medium, wherein the readable storage medium stores a program or instructions, and when the program or instructions are executed by a processor, the steps of the encoding method according to any one of claims 1 to 8 are implemented.

$S_{in}(t)$

$S_{out}(t)$

Modulated backscatter signals
(modulated backscatter signals)

Incident RF signals
（incident RF signals）

$\Gamma_T(t)$

$\Gamma_T = \Gamma_0$

$\Gamma_T = \Gamma_1$

$\Gamma_T = \Gamma_2$

$\Gamma_T = \Gamma_n$

Symbol     Impedance
Symbol 0→Impedance 0
Symbol 1→Impedance 1
······
Symbol n→Impedance n

Channel coding and
modulation block
(channel coding and
modulation block)

Controller

FIG. 1a

$s_1$
$-s_2{}^*$

Transmit antenna 1
(Tx antenna 1)

$s_2$
$s_1{}^*$

Transmit antenna 2
(Tx antenna 2)

$h_1$

$h_2$

Receive antenna
(Rx antenna)

Interference and noise
(Interference & noise)

$n_1$ — $n_2$

Channel
estimation

$h_1$

$h_2$

Combiner

$h_1$   $h_2$

$\hat{s}_1$   $\hat{s}_2$

Maximum likelihood detector
(maximum likelihood detector)

FIG. 1b

201

An encoder performs encoding in a DSTBC
encoding mode by using an NSTBC
codebook, to obtain a transmitted symbol in a
current symbol period

202

The encoder determines a transmitted symbol
in a symbol period next to the current symbol
period based on the transmitted symbol
obtained through encoding in the current
symbol period and the NSTBC codebook

FIG. 2

300

Encoding apparatus

301

Differential
encoding module

302

NSTBC encoding
module

FIG. 3

400

Communication
device

401

Processor

402

Memory

FIG. 4

FIG. 5

FIG. 6

## INTERNATIONAL SEARCH REPORT

| International application No. |
| --- |
| **PCT/CN2022/141968** |

| A. | CLASSIFICATION OF SUBJECT MATTER |
| --- | --- |

H04L 1/00(2006.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 编码, 差分空时分组码, 新型空时分组码, 码本, 当前, 下一个, 符号周期, 发送符号, 信道状态信息, 反向散射通信, code, DSTBC, NSTBC, codebook, current, next, symbol, period, CSI, BSC

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109547077 A (CHONGQING BOE INTELLIGENT ELECTRONIC SYSTEM CO., LTD. et al.) 29 March 2019 (2019-03-29)<br>description, paragraphs [0003]-[0188] | 1-18 |
| A | CN 108234082 A (CHONGQING UNIVERSITY OF POSTS AND TELECOMMUNICATIONS) 29 June 2018 (2018-06-29)<br>entire document | 1-18 |
| A | CN 108540185 A (UNIVERSITY OF ELECTRONIC SCIENCE AND TECHNOLOGY OF CHINA) 14 September 2018 (2018-09-14)<br>entire document | 1-18 |
| A | CN 110855328 A (XI'AN JIAOTONG UNIVERSITY) 28 February 2020 (2020-02-28)<br>entire document | 1-18 |
| A | CN 101455044 A (NOKIA SIEMENS NETWORKS B.V.) 10 June 2009 (2009-06-10)<br>entire document | 1-18 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 March 2023** | **19 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/141968**

| Patent document cited in search report | | | Publication date (day/month/year) | Patent family member(s) | | | Publication date (day/month/year) |
|---|---|---|---|---|---|---|---|
| CN | 109547077 | A | 29 March 2019 | None | | | |
| CN | 108234082 | A | 29 June 2018 | None | | | |
| CN | 108540185 | A | 14 September 2018 | None | | | |
| CN | 110855328 | A | 28 February 2020 | None | | | |
| CN | 101455044 | A | 10 June 2009 | CN | 101455044 | B | 08 August 2012 |

Form PCT/ISA/210 (patent family annex) (July 2022)

**EP 4 459 907 A1**

**Patent documents cited in the description**

- CN 202111658299